# EUROPÄISCHE PATENTANMELDUNG

(11) **EP 2 163 325 A2**
(43) Veröffentlichungstag der Anmeldung: **17.03.2010**
(21) Anmeldenummer: 09011626.0
(22) Anmeldetag: 11.09.2009
(51) Int. Cl.: B21D 51/24, F17C 1/02

(54) **Verfahren zur Herstellung eines Gasbehaelters, insbesondere für Kraftfahrzeuge**

(30) Priorität: 15.09.2008 DE 102008047352
(71) Anmelder: Benteler SGL GmbH & Co., KG, 33102 Paderborn (DE)
(72) Erfinder: Howe, Christian, 33104 Paderborn (DE); Handing, Christian, Dr., 33449 Langenberg (DE); Sahebkar, Bahmann, 40724 Hilden (DE); Grasser, Sebastian, 86316 Friedberg (DE); Wohletz, Bernd, 86405 Meitingen (DE); Schmidt, Tobias, 86163 Augsburg (DE); Putz, Thomas, 86707 Westendorf (DE)
(74) Vertreter: Griepenstroh, Jörg

(57) **Zusammenfassung**

Die Erfindung betrifft ein Verfahren zum Herstellen eines Gasbehälters, der einen faserumwickelten metallischen Liner aufweist, umfassend
- Bereitstellen von Stahlblechen aus einer Edelstahllegierung mit einem Kohlenstoffgehalt (C) von weniger oder gleich 0,4 Gew.-% und einem Mangangehalt (Mn) und/oder Siliziumgehalt (Si) von weniger oder gleich 1,0 Gew.-%,
- das Umformen und Fügen eines Stahlblechs zu einem zylinderförmigen Rohrkörper (2),
- das Herstellen von Boden (4) und Deckel (3) aus jeweils einem Stahlblech, vorzugsweise in einem Tiefziehverfahren,
- das Fügen des zylinderförmigen Rohrkörpers (2) mit dem Boden (4) und dem Deckel (3) mittels Laserfügen, vorzugsweise mit defokussierten Laserstrahl zu einem Liner,
- das Umwickeln des Liners mit einer Faserverstärkung.

## Beschreibung

Die Erfindung betrifft ein Verfahren zum Herstellen eines Gasbehälters, insbesondere eines Erdgasbehälters für Kraftfahrzeuge, der einen faserumwickelten metallischen Liner aufweist.

Gasbehälter, beispielsweise Erdgasbehälter sind bekannt und werden z.B. gemäß der EN ISO 11439 oder ECE-R110 in verschiedenen Klassen eingeordnet.

Liner sind gasdichte Behälter, um welche Verstärkungsfasern zur Aufnahme der aus der Innendruckbeanspruchung entstehenden Spannungen gewickelt werden. Metallische Liner sind so konstruiert, dass sie die Beanspruchung zusammen mit der Verstärkung aufnehmen. Die Gasbehälter werden in unterschiedliche Typen und zwar in den Typ CNG-1, CNG-2, CNG-3 oder CNG-4 eingeteilt.

Bekannt ist, die Gasbehälter, insbesondere die des Typs CNG-3, mit relativ dickwandigen Komponenten herzustellen. Üblicherweise werden Gasbehälter des Typs CNG-3 in Kraftfahrzeugen mit Erdgasantrieb eingesetzt. Durch die relativ dickwandige Ausführung des Gasbehälters wird das Kraftfahrzeug aber nachteiligerweise mit einer erheblichen Last zusätzlich beaufschlagt, welche sich nicht nur negativ auf das Fahrverhalten auswirkt, sondern auch äußerst negativ einen erhöhten Kraftstoffverbrauch bewirkt, da der Verbrennungsmotor zusätzlich zu der ohnehin vorhandenen Gewichtsmasse des Fahrzeugs noch den relativ schweren Gastank transportieren muss. Ferner sind die bekannten Herstellverfahren wie z.B. Druckwalzen oder Kryostrecken sehr kosten-, zeit- und energieintensiv. Nach der Herstellung des metallischen Liners wird mit einer anschließenden Auto-Frettage ein stetiger Kontakt zwischen dem metallischen Liner und der Faserumwicklung gewährleistet. Bei einer Auto-Frettage wird der metallische Liner durch Innendruck bis über die Streckgrenze so weit gedehnt, dass eine bleibende plastische Verformung entsteht, die dazu führt, dass im drucklosen Zustand des Gasbehälters der metallische Liner eine Druckspannung und die Faserumwicklung eine Zugspannung hat.

Eine dünnwandige metallische Hochdruckflasche, die durch eine Aufwicklung auf Kohlenstofffaserbasis verstärkt ist, und ein Verfahren zu deren Herstellung beschreibt die EP 0 410 884 B1. Die Hochdruckflasche besteht aus einem zylindrischen Rohrkörper mit einem angeschweißten Deckel- und Bodenteil.

Aus der DE 195 02 992 A1 ist ein Verfahren zur Herstellung von Hohlkörpern bekannt. Hierbei wird erst eine geschlossene Mantelwand für den Behälter geformt und anschließend ein Boden sowie ein abschließender Oberteil ausgebildet.

Ausgehend von dem Stand der Technik liegt der Erfindung die Aufgabe zugrunde, ein Verfahren zur Herstellung von Gasbehältern, insbesondere nach dem Typ CNG-3 anzugeben, welches eine effizientere Herstellung eines in seinem Gewicht reduzierten Gasbehälters, insbesondere einen in seinem Gewicht reduzierten Erdgastank für Kraftfahrzeuge, ermöglicht.

Diese Aufgabe wird durch ein Verfahren mit den Merkmalen von Anspruch 1 gelöst.

Ausgangsprodukt bilden Stahlbleche aus einer Edelstahllegierung mit einem Kohlenstoffgehalt (C) von weniger oder gleich 0,4 Gew.-% und einem Mangangehalt (Mn) und/oder Siliziumgehalt (Si) von weniger oder gleich 1,0 Gew.-%. Die erfindungsgemäß eingesetzte Edelstahllegierung enthält wie üblich Phosphor (P) und Schwefel (S). In diesem Zusammenhang ist es erfindungswesentlich, dass die Gesamtmenge an Phosphor und Schwefel (P + S) kleiner oder gleich 0,03 Gew.-% beträgt. Dies ist wichtig für das Dehnungsverhalten des aus der Edelstahllegierung hergestellten Gasbehälters und der Kerbschlagzähigkeit. Insbesondere soll der Gasbehälter eine Dehnung von mindestens 14 % besitzen.

Der Liner des Gasbehälters wird aus einem zylindrischen Rohrkörper sowie einem Boden und einem Deckel zusammengesetzt. Zur Herstellung des zylindrischen Rohrkörpers sowie des Bodens und des Deckels werden vorkonfektionierte Stahlbleche aus einer solchen Edelstahllegierung bereitgestellt.

Danach wird aus zumindest einem Edelstahlblech ein zylindrischer Rohrkörper geformt und gefügt. Des Weiteren werden der Boden und der Deckel umformtechnisch aus Edelstahlblechen hergestellt. Der Boden und der Deckel werden dann mit dem Rohrkörper mittels Laserschweißung gefügt. Anschließend wird der so hergestellte metallische Liner einer Wärmebehandlung unterzogen, wonach der Liner mit einer Faserverstärkung umwickelt wird.

Durch die Wärmebehandlung können die Materialeigenschaften des Liners zweckoptimiert eingestellt werden. Hierdurch soll insbesondere eine Dehnung von über 14 % bei maximaler Festigkeit erreicht werden.

Mit dem erfindungsgemäßen Verfahren wird ein aus dünnwandigen Edelstahlblechen bestehender metallischer Liner erzeugt, der aufgrund der dünnwandigen Ausgestaltung naturgemäß leichter ist als bekannte metallische Liner, welche aus dickwandigen Stahlwerkstoffen hergestellt sind. Weiter kann mit dem erfindungsgemäßen Verfahren eine semikontinuierliche Prozessführung ermöglicht werden, so dass größerer Mengen an Druckgasbehältern insbesondere für Fahrzeuge herstellbar sind. Ein weiterer Vorteil ist darin zu sehen, dass der erfindungsgemäß verwendete Werkstoff eine besonders gute Verträglichkeit gegenüber dem eingesetzten Gas (Wasserstoff, Erdgas), und eine optimale Barriere gegen eine Permeation von Gasen aufweist. Das erfindungsgemäße Verfahren ist unter Verzicht auf die im Stand der Technik energieintensiven Herstellverfahren besonders Energie- und damit Kosteneffizient.

Vorteilhafte Ausgestaltungen des erfindungsgemäßen Verfahrens zeigen die Ansprüche 2 bis 12 auf.

Besonders vorteilhaft werden der zylinderförmige Rohrkörper selbst entlang seiner Längsnaht sowie der Rohrkörper mit dem Boden und dem Deckel mittels eines defokussierten Laserstrahls verschweißt. Dies ermöglicht einerseits ein besonders effizientes und werkstoffgerechtes Fügen der Komponenten des Liners. Andererseits werden durch diese Vorgehensweise Kantenfehler in dem fertigen Behälter vermieden. Des Weiteren kann mit einem defokussierten Laserstrahl noch eine Glättung der Naht erfolgen und/oder eine Wärmebehandlung des Nahtbereichs erzielt werden. Die Bauteile des Liners können stumpf aneinander gesetzt verschweißt oder über einen vorgesehenen Absatz aneinander gesetzt und teilweise überlappend zusammengeschweißt werden.

Vorzugsweise werden der Boden und der Deckel in einem Tiefziehverfahren hergestellt. Der Deckel, auch als Flaschenkopf bezeichnet, ist mit einem Flaschenhals versehen. Der Flaschenhals ist an den Deckel angeschweißt.

Günstig im Sinne der Erfindung ist, wenn die Edelstahllegierung zusätzlich zu den genannten Legierungsbestandteilen mit einem Kohlenstoffgehalt (C) von weniger oder gleich 0,4 Gew.-% und mit einem Mangangehalt (Mn) von weniger oder gleich 1,0 Gew.-% und mit einem Siliziumgehalt (Si) von weniger oder gleich 1,0 Gew.-% noch einen Molybdängehalt (Mb) von weniger oder gleich 1,3 Gew.-% und einen Vanadiumgehalt (V) von weniger oder gleich 0,2 Gew.-% aufweist.

Für die Praxis wird auch eine Edelstahllegierung als vorteilhaft angesehen mit einem Kohlenstoffgehalt (C) von weniger oder gleich 0,4 Gew.-% und einem Mangangehalt (Mn) von weniger oder gleich 1,0 Gew.-% sowie einem Siliziumgehalt (Si) von weniger oder gleich 1,0 Gew.-%, weiterhin einem Chromgehalt (Cr) von weniger oder gleich 18,0 Gew.-% und einem Nickelgehalt (Ni) von weniger oder gleich 5,0 Gew.-%.

Des Weiteren können die erfindungsgemäß eingesetzten Stahllegierungen Zusätze an Niob (Nb), Titan (Ti) oder Vanadium (V) aufweisen.

Zweckmäßig ist weiter vorgesehen, dass die Edelstahllegierung eine feinkörnige Struktur aufweist. Stets ist die Gesamtmenge an Phosphor und Schwefel kleiner oder gleich 0,03 Gew.-%.

Im Rahmen der Erfindung kommen vorzugsweise hochfeste gehärtete Liner zum Einsatz. Der Liner wird vor dem Auftragen der Faserverstärkung durch eine geeignete Wärmebehandlung vergütet. Hierdurch erhält man einen Liner mit hoher Festigkeit bei gleichzeitig hohen Zähigkeitseigenschaften.

Besonders bevorzugt wird die Wärmebehandlung zweistufig ausgeführt. In einer ersten Wärmebehandlungsstufe wird der Liner gehärtet.

Das Härten erfolgt durch schnelle Abkühlung aus dem Austenitgebiet heraus. Die Temperaturen für das Härten liegen oberhalb der Temperatur der vollständigen Ferritauflösung, insbesondere bei Temperaturen zwischen 900°C und 1.000 °C, insbesondere 1.100 °C.

In einer zweiten Wärmebehandlungsstufe wird der Liner nochmals gezielt erwärmt, um seine Eigenschaften zu beeinflussen, insbesondere um Spannungen abzubauen und die Dehnung einzustellen. Der Liner wird hier durch Erwärmen auf Temperaturen unterhalb des Umwandlungspunktes A₁ der Edelstahllegierung angelassen. Die Anlasstemperaturen bewegen sich zwischen 400 °C und 600 °C bei einer entsprechend abgestimmten Anlassdauer von 1 Minute bis 25 Minuten.

Günstigerweise ist vorgesehen, dass ein Umwickeln des metallischen Liners mit der Faserverstärkung unter definierter bzw. geregelter Vorspannung erfolgt, wobei im metallischen Liner Druck- und in der Umwicklung Zugspannungen erzeugt werden.

In bevorzugter Ausführung wird als Faserverstärkung eine Kohlefaserverstärkung, bevorzugt vollumfänglich, um den metallischen Liner gewickelt.

Bevor die Faserverstärkung um den metallischen Liner gewickelt wird, ist vorteilhaft vorgesehen, dass der metallische Liner zunächst mit einer Klebschicht versehen wird, wobei die Klebschicht aus einem elastischen Kleber gebildet ist.

In bevorzugter Verwendung ist der mit dem erfindungsgemäßen Verfahren hergestellte Gasbehälter beispielsweise als solcher des Typs CNG-3 verwendbar, welcher sich insbesondere als Erdgastank (Compressed Natural Gas, CNG) für Kraftfahrzeuge mit Erdgasantrieb eignet. Natürlich soll die Verwendung des erfindungsgemäß hergestellten Gasbehälters nicht auf einen Einsatz als Erdgastank beschränkt sein. Denkbar ist z. B. auch eine Verwendung als Wasserstofftank für Fahrzeuge mit Wasserstoffantrieb. Insbesondere bei der Verwendung in Kraftfahrzeugen ist das mit dem erfindungsgemäßen Verfahren erreichte reduzierte Gewicht aufgrund der relativ dünnen Wandstärke des metallischen Liners vorteilhaft, da sich jedes zusätzliche Gewicht nachteilig auf das Fahrverhalten und insbesondere den Kraftstoffverbrauch des Kraftfahrzeuges auswirkt, so dass diese Nachteile mit dem erfindungsgemäß gewichtsreduzierten Gasbehälter, insbesondere mit dem erfindungsgemäß gewichtsreduzierten, beispielhaften Erdgastank für Kraftfahrzeuge zumindest reduziert sind.

Der mit dem erfindungsgemäßen Verfahren hergestellte Gasbehälter kann ein Volumen zwischen 10 und 165 Liter aufweisen, wobei die angegebenen Volumenbeträge natürlich nicht beschränkend sein sollen.

Die Erfindung wird nachfolgend anhand der in den schematischen Zeichnungen dargestellten Ausführungsbeispiele näher erläutert. Es zeigt:
- Figur 1: einen Gasbehälter bzw. dessen metallischen Liner mit seinen einzelnen Komponenten vor dem Fügen und
- Figur 2: den Liner eines erfindungsgemäßen Gasbehälters vor dem Wickeln mit einer Faserverstärkung.

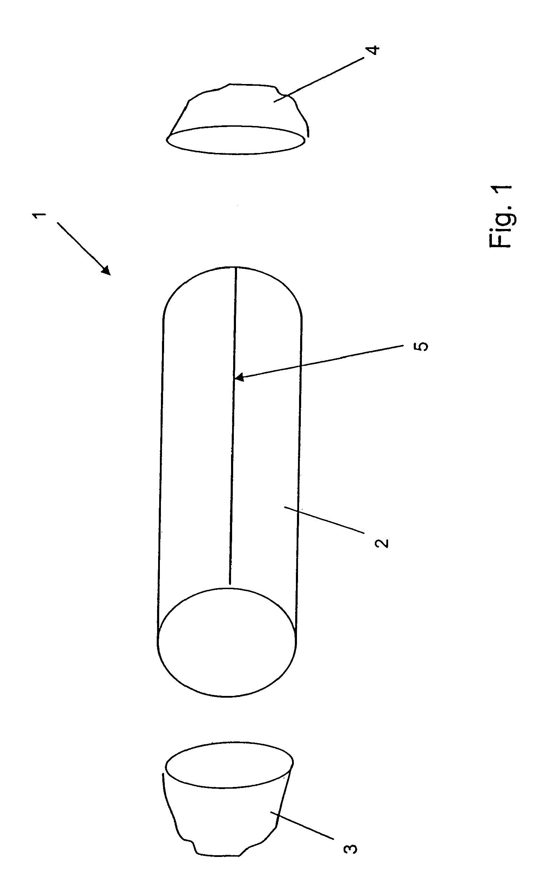

Figur 1 zeigt einen Gasbehälter 1, insbesondere einen Gasbehälter des Typs CNG-3 für Kraftfahrzeuge.

Der Gasbehälter 1 weist einen zylinderförmigen Rohrkörper 2 auf, welcher kopfseitig mit einem Deckel 3 und bodenseitig mit einem Boden 4 verschlossen ist bzw. wird.

Der zylinderförmige Rohrkörper 2 wurde aus einem Blech aus Edelstahl geformt wobei Stöße des Edelstahlblechs mittel einer Längsnaht 5 zusammengefügt wurden. Die Längsnaht 5 ist im Laserfügen, z.B. einem Laserschweißen stoffschlüssig hergestellt. Bevorzugt wird dazu ein defokussierter Laserstrahl eingesetzt.

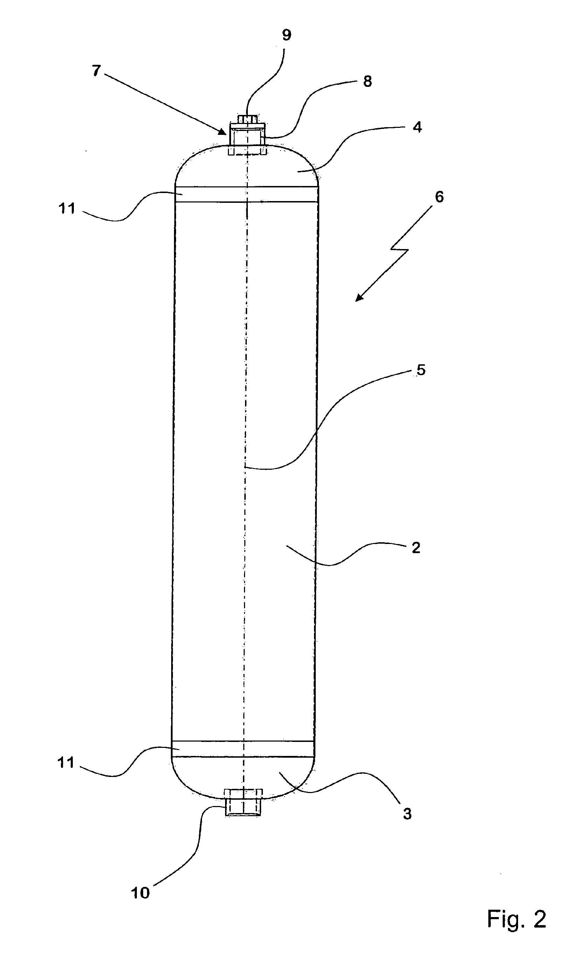

Die Figur 2 zeigt einen fertig geformten Liner 6. Im Deckel 3 ist ein Flaschenhals 7 bestehend aus einer Muffe 8 und einem Verschluss 9 angeschweißt. Auch im Boden 4 ist eine Muffe 10 eingeschweißt.

Der Grundwerkstoff des zylinderförmigen Rohrkörpers 2 ist bevorzugt eine Edelstahllegierung, die einen Kohlenstoffgehalt C von weniger oder gleich 0,4 Gew.-%, einen Mangangehalt Mn von weniger oder gleich 1,0 Gew.-%, einen Siliziumgehalt Si von weniger oder gleich 1,0 Gew.-% sowie einen Chromgehalt Cr von weniger oder gleich 18,0 Gew.-% und einen Nickelgehalt Ni von weniger oder gleich 5,0 Gew.-% aufweist. Die erfindungsgemäße Edelstahllegierung weist weiterhin Phosphor P und Schwefel S auf, wobei die Gesamtmenge bzw. Summe (P + S) von Phosphor P und Schwefel S kleiner 0,03 Gew.-% ist.

Der Deckel 3 und der Boden 4 werden bevorzugt im Tiefziehverfahren hergestellt, und bestehen bevorzugt aus demselben Grundwerkstoff wie der zylinderförmige Rohrkörper 2.

Auch Boden 4 und Deckel 3 werden in bevorzugter Vorgehensweise mittels Laserfügen (Laserschweißen) mit einem defokussierten Laserstrahl mit den jeweiligen Enden des zylinderförmigen Rohrkörpers 2 zusammengefügt. Diese Schweißnähte sind jeweils als Umfangsnaht ausführbar. Rohrkörper 2 und Deckel 3 sowie Boden 4 können zum Verschweißen stumpf aneinander gesetzt oder über einem angebrachten Absatz 11 zusammengeschweißt werden.

Der Deckel 3 kann in bevorzugter Ausführung einen Umfangsflansch aufweisen.

Nachdem Rohrkörper 2, Deckel 3 und Boden 4 zu einem metallischen Liner 6 zusammengefügt worden sind, wird seine Umfangsfläche vollumfänglich mit einer Faserverstärkung, bevorzugt mit einer Faserverstärkung, welche Kohlenstofffasern aufweist, vorzugsweise vollumfänglich umwickelt. Bevor die Faserumwicklung aufgebracht wird, wird die äußere Umfangsfläche des metallischen Liners 6 mit einer Klebschicht aus einem elastischen Kleber versehen.

Die Faserverstärkung kann vorzugsweise mit definierter bzw. geregelter Vorspannung aufgebracht werden.

Der aus den Behälterteilen, also dem Rohrkörper 2, dem Deckel 3 und dem Boden 4, gefügte fertige Liner 6 wird vor dem Aufbringen der Faserverstärkung durch eine geeignete Wärmebehandlung gehärtet bzw. warmvergütet. Hierzu wird der Liner 6 in einer ersten Wärmebehandlungsstufe in einer Zeit von kleiner gleich 7 Minuten auf eine Temperatur zwischen 900 °C und 1.100 °C, insbesondere ca. 1.080 °C, in das Austenitgebiet erwärmt und anschließend abgekühlt. Die Ofenzeit beträgt zwischen 1 Minute und 25 Minuten. Die Abkühlung auf Raumtemperatur erfolgt langsamer als 20 K/s. Die Abkühlung kann vorzugsweise unter Schutzatmosphäre oder unter Lagerung des Liners in Feuerfestformteilen erfolgen, die einen Wärmestau im Liner bewirken und die Abkühlgeschwindigkeit reduzieren.

In einer nachfolgenden zweiten Wärmebehandlungsstufe wird der Liner 6 angelassen, d. h. auf 400 °C bis 600 °C aufgeheizt, und hierbei innere Spannungen abgebaut und die Dehnung eingestellt. Hierzu wird der Liner 6 auf eine Temperatur unterhalb des Umwandlungspunktes A₁ der Edelstahllegierung erwärmt und anschließend gezielt abgekühlt. Die Aufheizzeit liegt zwischen 2 Minuten und 20 Minuten. Hierbei besteht die Möglichkeit der Restwärmenutzung zum Anlassen, d. h. die nach dem Abschrecken aus der Härtetemperatur noch vorhandene gewollte Linerrestkerntemperatur wird zum Anlassen ausgenutzt. Selbstverständlich kann auch eine völlige Neuerwärmung auf Anlasstemperatur erfolgen.

Durch die Wärmebehandlung können die Materialeigenschaften optimal eingestellt werden. Der Liner 6 soll eine Dehnung (A₅-Wert) von über 14 % bei maximaler Festigkeit (≧ 1.100 MPa) erreichen.

Der metallische Liner 6 weist vorteilhaft eine sehr dünne Wandstärke auf, welche so ausgeführt ist, dass vorgeschriebene, normierte Prüfungsanforderungen von dem blanken, also noch nicht umwickelten metallischen Liner 6 standgehalten werden können. Insgesamt ist der Gasbehälter 1 so ausgeführt, dass der mit Verstärkungsfasern umwickelte metallische Liner vorgeschriebenen, normierten Prüfungsanforderungen standhält.

### Bezugszeichen:

- 1 -: Gasbehälter
- 2 -: zylinderförmiger Rohrkörper
- 3 -: Deckel
- 4 -: Boden
- 5 -: Längsnaht
- 6 -: Liner
- 7 -: Flaschenhals
- 8 -: Muffe
- 9 -: Verschluss
- 10 -: Muffe
- 11 -: Absatz

## Patentansprüche

1. Verfahren zur Herstellung eines Gasbehälters, der einen faserumwickelten metallischen Liner aufweist, umfassend folgende Schritte:
- Bereitstellen von Stahlblechen aus einer Edelstahllegierung mit einem Kohlenstoffgehalt (C) von weniger oder gleich 0,4 Gew.-%, einem Mangangehalt (Mn) und/oder Siliziumgehalt (Si) von weniger oder gleich 1,0 Gew.-% und die Edelstahllegierung Phosphor (P) und Schwefel (S) enthält, wobei die Summe (P + S) von Phosphor (P) und Schwefel (S) kleiner oder gleich 0,03 Gew.-% beträgt.
- Umformen und Fügen zumindest eines Stahlblechs zu einem zylinderförmigen Rohrkörper (2),
- Herstellen eines Deckels (3) und eines Bodens (4) aus jeweils einem Stahlblech,
- Fügen des zylinderförmigen Rohrkörpers (2) mit dem Deckel (3) und dem Boden (4) mittels Laserfügen zu einem Liner,
- Wärmebehandlung des Liners,
- Umwickeln des Liners mit einer Faserverstärkung.

2. Verfahren nach Anspruch 1, **dadurch gekennzeichnet, dass** das Fügen von zylinderförmigem Rohrkörper (2), Deckel (3) und Boden (4) mittels defokussiertem Laserstrahl erfolgt.

3. Verfahren nach Anspruch 1 oder 2, **dadurch gekennzeichnet, dass** der Deckel (3) und der Boden (4) in einem Tiefziehverfahren hergestellt werden.

4. Verfahren nach einem der Ansprüche 1 bis 3, **dadurch gekennzeichnet, dass** die Edelstahllegierung einen Kohlenstoffgehalt (C) von weniger oder gleich 0,4 Gew.-% und einen Mangangehalt (Mn) von weniger oder gleich 1,0 Gew.-% und einen Siliziumgehalt (Si) von weniger oder gleich 1,0 Gew.-% und einen Molybdängehalt (Mb) von weniger oder gleich 1,3 Gew.-% und einen Vanadiumgehalt (V) von weniger oder gleich 0,2 Gew.-% aufweist.

5. Verfahren nach einem der Ansprüche 1 bis 3, **dadurch gekennzeichnet, dass** die Edelstahllegierung einen Kohlenstoffgehalt (C) von weniger oder gleich 0,4 Gew.-% und einen Mangangehalt (Mn) von weniger oder gleich 1,0 Gew.-% und einen Siliziumgehalt (Si) von weniger oder gleich 1,0 Gew.-% und einen Chromgehalt (Cr) von weniger oder gleich 8,0 Gew.-% sowie einen Nickelgehalt (Ni) von weniger oder gleich 5,0 Gew.-% aufweist.

6. Verfahren nach Anspruch 5, **dadurch gekennzeichnet, dass** die Edelstahllegierung Zusätze von Niob (Nb), Titan (Ti) oder Vanadium (V) enthält.

7. Verfahren nach einem der Ansprüche 1 bis 6, **dadurch gekennzeichnet, dass** die Edelstahllegierung eine feinkörnige Struktur aufweist.

8. Verfahren nach einem der Ansprüche 1 bis 7, **dadurch gekennzeichnet, dass** die Wärmebehandlung des Liners mehrstufig, insbesondere zweistufig, erfolgt.

9. Verfahren nach einem der Ansprüche 1 bis 7, **dadurch gekennzeichnet, dass** der Liner in einer ersten Wärmebehandlungsstufe warmvergütet und gehärtet und in einer zweiten Wärmebehandlungsstufe angelassen wird.

10. Verfahren nach einem der Ansprüche 1 bis 9, **dadurch gekennzeichnet, dass** ein Umwickeln des metallischen Liners mit der Faserverstärkung unter definierter bzw. geregelter Vorspannung erfolgt.

11. Verfahren nach einem der Ansprüche 1 bis 10, **dadurch gekennzeichnet, dass** als Faserverstärkung eine Kohlefaserverstärkung bevorzugt vollumfänglich um den metallischen Liner gewickelt wird.

12. Verfahren nach einem der Ansprüche 1 bis 11, **dadurch gekennzeichnet, dass** der metallische Liner zunächst mit einer Klebschicht versehen wird, bevor die Faserverstärkung um den metallischen Liner gewickelt wird, wobei die Klebschicht aus einem elastischen Kleber gebildet ist.

13. Verwendung eines Gasbehälters, der insbesondere mit einem Verfahren nach einem der vorhergehenden Ansprüche hergestellt ist, als Erdgastank für Kraftfahrzeuge.
